(19) Europäisches Patentamt
European Patent Office
Office européen des brevets

(11) EP 2 581 414 B1

(12) EUROPEAN PATENT SPECIFICATION

(45) Date of publication and mention of the grant of the patent:
**22.06.2016 Bulletin 2016/25**

(21) Application number: **13150458.1**

(22) Date of filing: **05.01.2009**

(51) Int Cl.:
***C08L 77/00*** *(2006.01)* ***B32B 27/34*** *(2006.01)*
***B32B 27/40*** *(2006.01)* ***C08K 5/134*** *(2006.01)*
***C08K 5/435*** *(2006.01)* ***C08K 5/10*** *(2006.01)*
***B32B 27/08*** *(2006.01)* ***C08L 77/02*** *(2006.01)*
***B32B 23/08*** *(2006.01)* ***B32B 23/20*** *(2006.01)*
***B32B 27/18*** *(2006.01)* ***B32B 27/20*** *(2006.01)*
***B32B 27/28*** *(2006.01)* ***B32B 27/30*** *(2006.01)*
***B32B 27/32*** *(2006.01)* ***B32B 27/36*** *(2006.01)*

# (54) Polyamide resin molding material and laminate using the same

Formmaterial aus Polyamidharz und Laminat damit

Matériau de moulage à base de polyamide et stratifié utilisant celui-ci

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **10.01.2008 JP 2008003210**

(43) Date of publication of application:
**17.04.2013 Bulletin 2013/16**

(62) Document number(s) of the earlier application(s) in accordance with Art. 76 EPC:
**09700469.1 / 2 230 276**

(73) Proprietor: **Ube Industries, Ltd.**
**Ube-shi, Yamaguchi 755-8633 (JP)**

(72) Inventors:
- **Kubo, Tsuyoshi**
**Ube-shi, Yamaguchi 755-8633 (JP)**
- **Enomoto, Tatsuya**
**Ube-shi, Yamaguchi 755-8633 (JP)**
- **Yamasaki, Kouji**
**Ube-shi, Yamaguchi 755-8633 (JP)**

(74) Representative: **Gille Hrabal**
**Brucknerstrasse 20**
**40593 Düsseldorf (DE)**

(56) References cited:
**US-A- 5 789 529**
**US-A1- 2004 214 963**
**US-A1- 2007 172 670**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 581 414 B1

## Description

[Technical Field]

The present invention relates to a laminate comprising a polyamide resin molding material and a thermoplastic polyurethane molded article.

[Background Art]

Polyamide resins are utilized as engineering plastics in wide fields including automobiles and electrical or electronic parts because of their excellent heat resistance, mechanical properties and electrical properties and the like. In particular, polyamide 11 and polyamide 12 are high in chemical resistance, heat resistance and dimensional stability at the time of water absorption and have hitherto been used in various industrial fields for applications such as hoses, tubes and the like. However, in the case of providing such a polyamide resin for applications such as hoses, tubes and the like, polyamide 11 and polyamide 12 are insufficient in flexibility that those polyamide resins originally possess and are often required to have more flexibility.

As a method for imparting this flexibility, a method for blending a plasticizer having relatively good compatibility with such a polyamide resin in such a polyamide resin is general. As the plasticizer, toluenesulfonic acid alkylamides, benzenesulfonic acid alkylamides, hydroxybenzoic acid alkyl esters and the like are used (see, for example, Patent Documents 1 and 2). However, compositions of polyamide 11 or polyamide 12 having such a plasticizer blended therein have such a defect that they are remarkably inferior in low-temperature impact resistance to those polyamide resins before blending.

Also, as a method for imparting flexibility to a molded article using polyamide 11 or polyamide 12 without impairing original performances of such a resin, there is known a method for laminating a thermoplastic polyurethane molded article and the foregoing polyamide resin molded article. In that case, as the laminating method, from the viewpoint of productivity, a thermal welding method capable of achieving a co-extrusion method or the like is advantageous. However, in general, it may not be said that thermal weldability between a polyamide resin and a thermoplastic polyurethane is good, and in particular, in the case of blending a plasticizer in a polyamide resin, there was involved such a problem that the thermal weldability to a thermoplastic polyurethane is lowered.

On the other hand, it is known that by increasing a terminal amino group concentration of a polyamide resin, adhesiveness to a thermoplastic polyurethane is enhanced (see Patent Document 3). However, as demonstrated in the Comparative Examples as described later, the adhesiveness to a thermoplastic polyurethane is not improved only by increasing the terminal amino group concentration.

[Patent Document 1] JP-A-62-283151
[Patent Document 2] JP-A-1-185362
[Patent Document 3] WO 2004/050363

[Disclosure of the Invention]

[Problems that the Invention is to Solve]

Under such circumstances, the present invention has been made, and an object thereof is to provide a polyamide resin molding material having excellent thermal weldability to thermoplastic polyurethane molded articles and a laminate using the same.

[Means for Solving the Problems]

In order to attain the foregoing object, the present inventors made extensive and intensive investigations. As a result, it has been found that the foregoing object can be attained by a polyamide resin molding material containing a polyamide resin having a large content of a terminal amino group and an aromatic compound having a specified structure in a prescribed ratio, leading to accomplishment of the present invention.

That is, the present invention provides the following:

[1] A laminate comprising a polyamide resin molded article and a thermoplastic polyurethane molded article thermally welded to each other,
whereby the polyamide resin molded article is made from a thermal welding molding material comprising from 3 to

40 parts by mass of a compound (B) represented by the following general formula (2) based on 100 parts by mass of a polyamide resin (A) having a (terminal amino group/terminal carboxyl group) molar ratio of 1 or more:

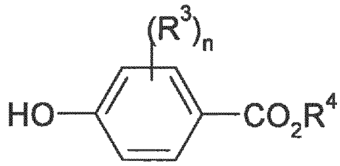

(2)

wherein

$R^3$ represents an alkyl group having from 1 to 4 carbon atoms; n represents an integer of from 0 to 5; and when n is 2 or more, each $R^3$ may be the same as or different from every other $R^3$ ; and
$R^4$ represents an alkyl group having from 4 to 20 carbon atoms and may contain at least one group selected from an ether group, an oxyethylene group and an oypropylene group;
whereby the thermoplastic polyurethane molded article is an ether based polyurethane molded article.

[2] The laminate as set forth above in [1], wherein the polyamide resin (A) is polyamide 11 and/or polyamide 12.
[3] The laminate as set forth above in [1] or [2], wherein in the general formula (2), $R^4$ is an alkyl group having from 6 to 18 carbon atoms; and n is 0.
[4] The laminate as set forth above in any of [1] to [3], which is thermally welded by a co-extrusion method.
[5] Use of a thermal welding molding material comprising from 3 to 40 parts by mass of a compound (B) represented by the following general formula (2) based on 100 parts by mass of a polyamide resin (A) having a (terminal amino group/terminal carboxyl group) molar ratio of 1 or more:

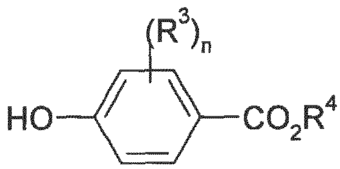

(2)

wherein

$R^3$ represents an alkyl group having from 1 to 4 carbon atoms; n represents an integer of from 0 to 5; and when n is 2 or more, each $R^3$ may be the same as or different from every other $R^3$; and
$R^4$ represents an alkyl group having from 4 to 20 carbon atoms and may contain at least one group selected from an ether group, an oxyethylene group and an oxypropylene group;
for preparing a laminate by thermal welding a molded article prepared from the thermal welding molding material to a molded article prepared from an ether based polyurethane.

[Advantages of the Invention]

According to the present invention, it is possible to provide a laminate comprising a polyamide resin molding material and a thermoplastic polyurethane molded article and having high adhesive strength.

[Best Modes for Carrying Out the Invention]

First of all, the polyamide resin molding material in the laminate of the present invention (hereinafter also simply referred to as "molding material") is described.

[Molding material]

The polyamide resin molding material in the laminate of the present invention is a thermal welding molding material with a thermoplastic polyurethane molded article and is a material containing a polyamide resin (A) and a compound (B) represented by the foregoing general formula (2).

[Polyamide resin (A)]

The polyamide resin (A) which is used in the present invention is required to have a (terminal amino group/terminal carboxyl group) molar ratio (hereinafter also referred to as "terminal group molar ratio") of 1 or more. When this molar ratio is less than 1, in the case of thermal welding to a thermoplastic polyurethane (hereinafter also referred to as "TPU") molded article, the adhesive strength is insufficient so that the object of the present invention is not attained. The foregoing molar ratio is preferably 1.1 or more, more preferably 1.5 or more, and further preferably 2.0 or more.
The polyamide resin which is used in the present invention is not particularly limited so far as the foregoing molar ratio is 1 or more. However, from the viewpoint of various physical properties, the following polyamide 11 and polyamide 12 are preferable. In this respect, the polyamides 11 and 12 having the foregoing molar ratio of more than 1 are also referred to as "terminal amino group-rich polyamide 11" and "terminal amino group-rich polyamide 12", respectively. Also, in the case of expressing the both, it may be also called "terminal amino group-rich polyamide 11/12".
In the case where the polyamide resin which is used in the present invention is a terminal amino group-rich polyamide 11/12, from the viewpoint of adhesive strength against the TPU molded article as well as from the viewpoints of melt stability of the polyamide resin and suppression of the generation of a gel material, a terminal amino group concentration is preferably 30 milliequivalents or more, and more preferably from 40 to 80 milliequivalents per kg of the polyamide resin.

<Terminal amino group-rich polyamide 11/12>

The terminal amino group-rich polyamide 11 which is used in the present invention can be obtained by polymerizing 11-aminoundecanoic acid or undecanelactam, whereas the terminal amino group-rich polyamide 12 can be obtained by polymerizing 12-aminododecanoic acid or laurolactam.
Also, the terminal amino group-rich polyamide 11/12 may be a copolymer composed of the respective foregoing monomers as major components (about 60 % by mass or more). Examples of the copolymerization component include tricyclic or polycyclic lactams, amino carboxylic acids and nylon salts composed of a diamine and a dicarboxylic acid.
The terminal amino group-rich polyamide 11/12 is manufactured by, for example, polymerizing or copolymerizing the foregoing polyamide raw material in the presence of an amine by a known method such as melt polymerization, solution polymerization, solid phase polymerization and the like. Alternatively, it is manufactured by, after polymerization, performing melt kneading in the presence of an amine. In this way, though the amine can be basically added in an arbitrary stage at the time of polymerization or in an arbitrary stage after polymerization and at the time of melt kneading, in the case of taking into consideration interlayer adhesive strength in the laminate, the amine is desirably added in a stage at the time of polymerization.
Examples of the foregoing amine include monoamines, diamines and triamines. Also, in addition to the amine, if desired, a carboxylic acid such as monocarboxylic acids, dicarboxylic acids, tricarboxylic acids and the like can also be added so far as the terminal group molar ratio does not fall outside the foregoing range.
Preferred examples of a polymerization apparatus include a batch type reactor, a single tank type or multi-tank type continuous polymerization apparatus, a tubular continuous polymerization apparatus, a kneading reaction extruder and the like.
As to the terminal amino group-rich polyamide 11/12 which is used in the present invention, from the viewpoints of interlayer adhesive strength against the TPU molded article, melt stability and suppression of the generation of a gel, a terminal amino group-rich polyamide 11/12 manufactured by the addition of a diamine at the time of polymerization is preferable, and furthermore, the foregoing diamine is preferably at least one member selected from the group consisting of aliphatic diamines and alicyclic diamines.
Also, so far as the foregoing requirement of the terminal group molar ratio in the mixture is met, it does not matter whether the terminal amino group-rich polyamide 11/12 is a mixture of two or more kinds of polyamides 11 having a different terminal group concentration from each other or a mixture of two or more kinds of polyamides 12 having a different terminal group concentration from each other. In that case, the terminal amino group concentration or terminal carboxyl group concentration of the mixture of polyamide 11 or polyamide 12 is determined by the terminal amino group, terminal carboxyl group concentration and blending ratio of the constituent polyamide 11 or polyamide 12. On that occasion, it is required that at least one kind thereof is composed of, as a constituent component, the polyamide 11 and/or polyamide 12 which meets the requirement that the (terminal amino group)/(terminal carboxyl group) molar ratio is 1 or more.
A relative viscosity (measured in conformity with JIS K6920) of the terminal amino group-rich polyamide 11/12 is preferably from 1.5 to 3.5, and more preferably from 1.8 to 3.0. When the foregoing relative viscosity is smaller than the foregoing lower limit value, there is a concern that a mechanical characteristic of the obtained laminate is insufficient, whereas when it is larger than the foregoing upper limit value, there is a concern that an extrusion pressure or a torque becomes too high at the time of molding so that the manufacture of a laminate becomes difficult.

The terminal amino group-rich polyamide 11/12 may be a homopolymer, or so far as the effects of the present invention are not impaired, it may be a mixture of the foregoing copolymers or a mixture (blend) with other polyamide resin or other thermoplastic resin. A content of the terminal amino group-rich polyamide 11/12 in the mixture is preferably 60 % by mass or more. Also, as a matter of course, it may be a mixture of a terminal amino group-rich polyamide 11 and a terminal amino group-rich polyamide 12.

<Blending resin>

Examples of other polyamide resin which can be blended include homopolymers such as polycaproamide (nylon 6), polyethylene adipamide (nylon 26), polytetramethylene adipamide (nylon 46), polyhexamethylene adipamide (nylon 66), polyhexamethylene azelamide (nylon 69), polyhexamethylene sebacamide (nylon 610), polyhexamethylene undecamide (nylon 611), polyhexamethylene dodecamide (nylon 612), polyhexamethylene terephthalamide (nylon 6T), polyhexamethylene isophthalamide (nylon 6I), polynonamethylene dodecamide (nylon 912), polydecamethylene dodecamide (nylon 1012), polydodecamethylene dodecamide (nylon 1212), polymetaxylylene adipamide (nylon MXD6), polytrimethylhexamethylene terephthalamide (TMHT), polybis(4-aminocyclohexyl)methane dodecamide (nylon PACM12), polybis(3-methyl-4-aminocyclohexyl)methane dodecamide (nylon dimethyl PACM12) and the like; and copolymers using raw material monomers capable of forming them. Also, a polyamide elastomer can be blended.

In the case of blending such other polyamide resin in the terminal amino group-rich polyamide 11 or terminal amino group-rich polyamide 12, it is blended in such a manner that a (terminal amino group/terminal carboxyl group) molar ratio of the whole of the polyamide resins is 1.1 or more, preferably 1.5 or more, and more preferably 2.0 or more.

Also, examples of other thermoplastic resin which can be blended include polyolefin based resins; polyester based resins; polyether based resins such as polyacetal, polyphenylene oxide and the like; polysulfone based resins such as polysulfone, polyether sulfone and the like; polythioether based resins such as polyphenylene sulfide, polythioether sulfone and the like; polyketone based resins such as polyetheretherketone, polyallyl ether ketone and the like; polynitrile based resins; polymethacrylate based resins such as polymethyl methacrylate, polyethyl methacrylate and the like; polyvinyl acetate based resins such as polyvinyl acetate and the like; polyvinyl chloride based resins such as polyvinylidene chloride, polyvinyl chloride, a vinyl chloride/vinylidene chloride copolymer, a vinylidene chloride/methyl acrylate copolymer and the like; cellulose based resins such as cellulose acetate, cellulose butyrate and the like; polycarbonate based resins such as polycarbonate and the like; polyimide based resins such as thermoplastic polyimides, polyamide-imides, polyether imides and the like; thermoplastic polyurethane resins; and the like.

Examples of the polyolefin based resin include high-density polyethylene, low-density polyethylene, ultrahigh molecular weight polyethylene, isotactic polypropylene, an ethylene/propylene copolymer, an ethylene/vinyl acetate copolymer, an ethylene/vinyl acetate copolymer saponified product, an ethylene/acrylic acid copolymer, an ethylene/methacrylic acid copolymer, an ethylene/methyl acrylate copolymer, an ethylene/methyl methacrylate copolymer, an ethylene/ethyl acrylate copolymer and the like.

Examples of the polyester based resin include polybutylene terephthalate, polyethylene terephthalate, polyethylene isophthalate, polyhexylene terephthalate, a PET/PEI copolymer, polyarylate, polybutylene naphthalate, polyethylene naphthalate, liquid crystal polyester and the like.

Examples of the polynitrile based resin include polyacrylonitrile, polymethacrylonitrile, an acrylonitrile/styrene copolymer, a methacrylonitrile/styrene copolymer, an acrylonitrile/butadiene/styrene copolymer, a methacrylonitrile/styrene/butadiene copolymer and the like.

[Compound (B) represented by the general formula (2)]

In the polyamide resin molding material of the present invention, a hydroxybenzoic acid ester represented by the following general formula (2) or a derivative thereof (hereinafter generically named as "compound (B)") is used as a plasticizer.

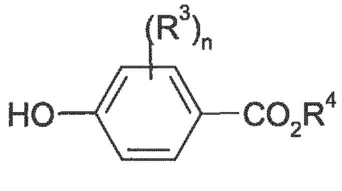

(2)

(In the formula, $R^3$ represents an alkyl group having from 1 to 4 carbon atoms; n represents an integer of from 0 to 5 and when n is 2 or more, each $R^3$ may be the same as or different from every other $R^3$; and $R^4$ represents an alkyl group having from 4 to 20 carbon atoms and may contain at least one group selected among an ether group, an

oxyethylene group and an oxypropylene group.)

In the general formula (2), the alkyl group having from 1 to 4 carbon atoms represented by $R^3$ includes a methyl group, an ethyl group, an n-propyl group, an isopropyl group, various butyl groups and the like.

n represents an integer of from 0 to 5; and when n is 2 or more, each $R^3$ may be the same as or different from every other $R^3$.

In the general formula (2), $R^4$ represents an alkyl group having from 4 to 20 carbon atoms, and preferably from 6 to 18 carbon atoms. The alkyl group having from 4 to 20 carbon atoms may be any of linear or branched. Examples thereof include various butyl groups, various pentyl groups, various hexyl groups, a 2-ethylhexyl group, various octyl groups, various decyl groups, various dodecyl groups, various tetradecyl groups, a 2-ethyldecyl group, various cetyl groups, various octadecyl groups, a cyclohexylmethyl group and the like.

Examples of the hydroxybenzoic acid ester include 2-ethylhexyl p-hydroxybenzoate, 2-ethyldecyl p-hydroxybenzoate, 2-hexyldecyl p-hydroxybenzoate and the like.

Also, the alkyl group having from 4 to 20 carbon atoms represented by $R^4$ may contain at least one group selected among an ether group, an oxyethylene group and an oxypropylene group. For example, it may be $-(OCH_2CH_2)_2-O-$(2-ethylhexyl group) or the like.

The foregoing compound (B) can be used alone or in combinations of two or more kinds thereof.

In the present invention, a content of the compound (B) is selected within the range of from 3 to 40 parts by mass based on 100 parts by mass of the polyamide resin (A). When the foregoing content is less than 3 parts by mass, the plasticizing effect is not substantially displayed, whereas when it exceeds 40 parts by mass, not only thermal weldability to the TPU molded article is lowered, but low-temperature impact resistance of the obtained laminate is lowered, and a possibility of the generation of bleedout of the plasticizer increases, and therefore, such is not preferable. Taking into consideration plasticizing effect, thermal weldability to the TPU molded article, low-temperature impact resistance of the laminate, bleedout of the plasticizer and the like, the content of the compound (B) is preferably from 5 to 30 parts by mass, and more preferably from 5 to 25 parts by mass.

In the present invention, so far as the effects of the present invention are not impaired, at least one arbitrary member can be properly selected among known other plasticizers which are conventionally used for polyamide resins and used jointly with the compound (B).

Examples of other plasticizer which can be used include hydroxybenzoic acid alkyl esters such as ethylhexyl O- or p-hydroxybenzoate, hexyldecyl O- or p-hydroxybenzoate, ethyldecyl O- or p-hydroxybenzoate, decyldodecyl O- or p-hydroxybenzoate, methyl O- or p-hydroxybenzoate, butyl O- or p-hydroxybenzoate, hexyl O- or p-hydroxybenzoate, n-octyl O- or p-hydroxybenzoate, decyl O- or p-hydroxybenzoate, dodecyl O- or p-hydroxybenzoate and the like.

(Arbitrary additive component)

In the polyamide resin molding material of the present invention, in addition to the polyamide resin (A) and the compound (B), various additive components, for example, an impact modifier, an antioxidant, an ultraviolet ray absorber, a light stabilizer, an antistatic agent, a flame retarder, a flame retardant aid, an agent for preventing dripping, a mold releasing agent, a nucleating agent, a crystallization accelerator, a lubricant, a dye, a pigment, an inorganic filler and the like can be properly blended, if desired so far as the object of the present invention is not impaired.

<Impact modifier>

The impact modifier is a rubbery polymer aiming at impact resistance modification and is preferably one having a tensile elastic modulus, as measured in conformity with ASTM D882, of not more than 500 MPa. Examples of such an impact modifier include an (ethylene and/or propylene)/$\alpha$-olefin based copolymer; an (ethylene and/or propylene)/($\alpha$,$\beta$-unsaturated carboxylic acid and/or unsaturated carboxylic acid ester) based copolymer; an ionomer polymer; an aromatic vinyl compound/conjugated diene compound based block copolymer; a polyamide elastomer; modified materials thereof; and the like.

A blending amount of this impact modifier is preferably from 1 to 35 parts by mass, more preferably from 5 to 25 parts by mass, and further preferably from 7 to 20 parts by mass based on 100 parts by mass of the polyamide resin (A). In the case where the blending amount of the impact modifier exceeds 35 parts by mass, an original mechanical characteristic as the laminate is impaired, and therefore, such is not preferable.

<Antioxidant>

A phenol based antioxidant and a phosphorus based antioxidant can be preferably used as the antioxidant.

Examples of the phenol based antioxidant include 2,6-di-tert-butyl-4-methylphenol, triethylene glycol bis[3-(3-tert-butyl-5-methyl-4-hydroxyphenyl)propionate], 1,6-hexanediol bis[3-(3,5-di-tert-butyl-4-hydroxyphenyl)propionate],

pentaerythritol tetrakis[3-(3,5-di-tert-butyl-4-hydroxyphenyl)propionate], octadecyl 3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylene bis(3,5-di-tert-butyl-4-hydroxy-hydrocinnamide), 3,5-di-tert-butyl-4-hydroxybenzyl phosphonate diethyl ester, tris(3,5-di-tert-butyl-4-hydroxybenzyl) isocyanurate, 3,9-bis{1,1-dimethyl-2-[β-(3-tert-butyl-4-hydroxy-5-methylphenyl)propionyloxy]ethyl}-2,4,8,10-tetraoxaspiro(5,5)undecane and the like.

Examples of the phosphorus based antioxidant include triphenyl phosphite, trisnonylphenyl phosphite, tris(2,4-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl)pentaerythritol diphosphite, 2,2-methylenebis(4,6-di-tert-butylphenyl)octyl phosphite, bis(nonylphenyl)pentaerythritol diphosphite, bis(2,4-di-tert-butylphenyl)pentaerythritol diphosphite, distearylpentaerythritol diphosphite and the like.

A content of such an antioxidant is usually from about 0.05 to 3 % by mass on the basis of the total amount of the molding material.

<Ultraviolet ray absorber>

A benzotriazole based ultraviolet ray absorber, a triazine based ultraviolet ray absorber, a benzoxazine based ultraviolet ray absorber, a benzophenone based ultraviolet ray absorber and the like can be used as the ultraviolet ray absorber.

Examples of the benzotriazole based ultraviolet ray absorber include 2-(2'-hydroxy-5'-methylphenyl)benzotriazole, 2-(2'-hydroxy-3'-(3,4,5,6-tetrahydrophthalimidomethyl)-5'-methylphenyl)benzotriazole, 2-(2'-hydroxy-3',5'-di-tert-butylphenyl)benzotriazole, 2-(2'-hydroxy-5'-tert-octylphenyl)benzotriazole, 2-(3'-tert-butyl-5'-methyl-2'-hydroxyphenyl)-5-chlorobenzotriazole, 2,2'-methylenebis(4-(1,1,3,3-tetramethylbutyl)-6-(2H-benzotriazol-2-yl)phenol), 2-(2'-hydroxy-3',5'-bis(α,α-dimethylbenzyl)phenyl-2H-benzotriazole, 2-(3',5'-di-tert-amyl-2'-hydroxyphenyl)benzotriazole, 5-trifluoromethyl-2-(2-hydroxy-3-(4-methoxy-α-cumyl)-5-tert-butylphenyl)-2H-benzotriazole and the like.

As the triazine based ultraviolet ray absorber, a hydroxyphenyltriazine based material, for example, a trade name, TINUVIN 400 (manufactured by Ciba Specialty Chemicals) is preferable.

Examples of the benzoxazine based ultraviolet ray absorber include 2-methyl-3,1-benzoxazin-4-one, 2-butyl-3,1-benzoxazin-4-one, 2-phenyl-3,1-benzoxazin-4-one, 2-(1- or 2-naphthyl)-3,1-benzoxazin-4-one, 2-(4-biphenyl)-3,1-benzoxazin-4-one, 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6- or 1,5-naphthalene)bis(3,1-benzoxazin-4-one), 1,3,5-tris(3,1-benzoxazin-4-on-2-yl)benzene and the like.

Examples of the benzophenone based ultraviolet ray absorber include 2-hydroxy-4-methoxybenzophenone, 2-hydroxy-4-n-octoxybenzophenone, 2-hydroxy-4-methoxy-2'-carboxybenzophenone, 2,4-dihydroxybenzophenone, 2,2'-dihydroxy-4-methoxybenzophenone and the like.

A content of such an ultraviolet ray absorber is usually from about 0.05 to 3 % by mass on the basis of the total amount of the molding material.

<Light stabilizer>

Examples of the light stabilizer include a hindered amine based light stabilizer (HALS). Specific examples thereof include a dimethyl succinate-1-(2-hydroxyethyl)-4-hydroxy-2,2,6,6-tetramethylpiperidine polycondensate, poly[6-(1,1,3,3-tetramethylbutyl)imino-1,3,5-triazine-2,4-diyl][(2,2,6,6-tetramethyl-4-piperidyl)imino]hexamethylene[(2,2,6,6-tetramethyl-4-piperidyl)imino], tetrakis(2,2,6,6-tetramethyl-4-piperidyl)-1,2,3,4-butanetetracarboxylate, bis(1,2,6,6-pentamethyl-4-piperidyl)-2-(3,5-di-t-butyl-4-hydroxybenzyl)-2-n-butyl malonate, 1,1'-(1,2-ethanediyl)bis(3,3,5,5-tetramethylpiperazinone), (mixed 2,2,6,6-tetramethyl-4-piperidyl/tridecyl)-1,2,3,4-butanetetracarboxylate, an N,N'-bis(3-aminopropyl)ethylenediamine-2,4-bis[N-butyl-N-(1,2,6,6-pentamethyl-4-piperidyl)amino]-6-chloro-1,3,5-triazine condensate, poly[6-N-morpholyl-1,3,5-triazin-2,4-diyl][(2,2,6,6-tetramethyl-4-piperidyl)imino]hexamethylene[(2,2,6,6-tetramethyl-4-piperidyl)imide], a condensate of N,N'-bis(2,2,6,6-tetramethyl-4-piperidyl)hexamethylenediamine and 1,2-dibormoethane, [N-(2,2,6,6-tetramethyl-4-piperidyl)-2-methyl-2-(2,2,6,6-tetramethyl-4-piperidyl)imino]propionamide and the like.

A content of such a light stabilizer is usually from about 0.1 to 3 % by mass on the basis of the total amount of the molding material.

<Antistatic agent>

As the antistatic agent, for example, a monoglyceride of a fatty acid having from 14 to 30 carbon atoms, specifically, stearic acid monoglyceride, palmitic acid monoglyceride and the like, a polyamide polyether block copolymer

and the like can be used.

Also, a conductivity-imparting filler can be contained. Examples of this conductivity-imparting filler include powders of a metal such as copper, nickel, silver and the like; fibers of a metal such as iron, stainless steel and the like; carbon black; metal inorganic compounds obtained by coating the surface of zinc oxide, a glass bead, titanium oxide or the like by means of metal sputtering, electroless plating or the like; and the like. Of these, carbon black is preferable because a hydroxyl group or a carboxyl group is present on the surface of its particle, and this is able to enhance adhesiveness as an adhesive group. In this respect, since the foregoing conductive filler is liable to cause deterioration in strength and fluidity of the molding material in which this is blended, it is desirable that its content is as small as possible within the range where a targeted conductivity level is obtained.

<Flame retarder>

The flame retarder which can be used in the present invention is not particularly limited, and known organic flame retarders and inorganic flame retarders can be used.

Examples of the organic flame retarder include bromine-containing flame retarders, nitrogen-containing flame retarders, phosphorus-containing flame retarders, nitrogen-phosphorus-containing flame retarders and the like. Of these, nitrogen-containing flame retarders, phosphorus-containing flame retarders and nitrogen-phosphorus-containing flame retarders, all of which are a non-halogen based flame retarder, are suitable from the viewpoint of environmental hygiene.

On the other hand, examples of the inorganic flame retarder include metal hydroxides such as aluminum hydroxide, magnesium hydroxide, calcium hydroxide, calcium aluminate and the like; zinc borate; mixtures of zinc borate and other zinc salt; and the like. Of these, magnesium hydroxide and a mixture of zinc borate and zinc phosphate are suitable. Such an inorganic flame retarder can also be used jointly with the organic flame retarder.

A content of the foregoing flame retarder varies depending upon its kind, and it is preferably from 5 to 40 % by mass, and more preferably from 10 to 30 % by mass from the viewpoints of imparting good flame retardancy and suppressing a lowering of other performances.

<Flame retardant aid>

Examples of the flame retardant aid include antimony oxide, a silicone powder, a low-melting point glass having a softening point of not higher than 800 °C and the like. Of these, from the standpoint of an effect for enhancing flame retardancy, antimony oxide is preferable, and antimony pentoxide and sodium antimonate are more preferable. An average particle size of the flame retardant aid is preferably from 0.05 to 200 μm, and more preferably from 0.1 to 100 μm. Furthermore, for the purpose of enhancing dispersibility in the polyamide resin (A), the flame retardant aid is preferably subjected to a surface treatment with a silane coupling agent, a titanium coupling agent, a fatty acid or a derivative thereof or other surface treating agent.

A content of the flame retardant aid is preferably from 0.1 to 15 % by mass, and more preferably from 0.5 to 10 % by mass from the viewpoint of an effect for enhancing flame retardancy.

<Agent for preventing dripping>

In the present invention, a polyfluoroolefin based resin can be used as an agent for preventing dripping at the time of burning.

The polyfluoroolefin based resin is usually a polymer or copolymer containing a fluoroethylene structure, and examples thereof include a difluoroethylene polymer, a tetrafluoroethylene polymer, a tetrafluoroethylene-hexafluoropropylene copolymer and a copolymer of tetrafluoroethylene and a fluorine-free ethylene based monomer.

The polyfluoroolefin based resin is preferably polytetrafluoroethylene (PTFE), and its average molecular weight is preferably 500,000 or more, and more preferably from 500,000 to 10,000,000.

In this respect, among the polyfluoroolefin based resins, by using one having fibril forming capability, higher properties for preventing dripping can be imparted.

The PTFE based resin having fibril forming capability is not particularly limited. Examples thereof include TEFLON 6-J (manufactured by Du Pont. Mitsui Fluorochemicals Company, Ltd.); POLYFLON D-1, POLYFLON F-103 and POLYFLON F-201 (manufactured by Daikin Industries, Ltd.); CD076 (manufactured by Asahi Glass Fluoropolymers Co., Ltd.); ALGOFLON F5 (manufactured by Montefluos S.p.A.); POLYFLON MPA, and POLYFLON FA-100 (manufactured by Daikin Industries, Ltd.); METABLEN A3000 and METABLEN A3700 (manufactured by Mitsubishi Rayon Co., Ltd.) which are an acrylic resin-modified polytetrafluoroethylene; and the like.

A content of such a polyfluoroolefin based resin is preferably from 0.05 to 8 % by mass, more preferably from 0.1 to 5 % by mass, and further preferably from 0.5 to 3 % by mass from the viewpoints of sufficient properties for preventing dripping and impact resistance and suppression in a lowering of appearance.

<Mold releasing agent>

A higher fatty acid ester of a monohydric or polyhydric alcohol can be used as the mold releasing agent. As such a higher fatty acid ester, a partial ester or complete ester of a monohydric or polyhydric alcohol having from 1 to 20 carbon atoms and a saturated fatty acid having from 10 to 30 carbon atoms is preferable. Examples of the partial ester or complete ester of a monohydric or polyhydric alcohol and a saturated fatty acid include stearic acid monoglyceride, stearic acid monosorbitate, behenic acid monoglyceride, pentaerythritol monostearate, pentaerythritol tetrastearate, propylene glycol monostearate, stearyl stearate, palmityl palmitate, butyl stearate, methyl laurate, isopropyl palmitate, 2-ethylhexyl stearate and the like. Of these, stearic acid monoglyceride and pentaerythritol tetrastearate are preferable.

A content of the mold releasing agent is usually from about 0.1 to 5.0 % by mass.

(Preparation of molding material)

A preparation method of the molding material is not particularly limited.

For example, the polyamide resin molding material can be prepared by adopting a method in which the polyamide resin (A) and the compound (B) and various additive components which are used, if desired are previously blended using a mixer such as a Henschel mixer, a tumbler, a ribbon blender and the like, and the blend is charged in a hopper of a single-screw or twin-screw extruder of a screw type extruder and the like and melt kneaded; a method in which any one of the foregoing respective components or a part thereof is previously blended, the blend is charged in a hopper of a single-screw or twin-screw extruder and melted within the extruder, and thereafter, the remaining components are charged from a melting zone on the way of the extruder and melt kneaded; or the like.

The thus obtained polyamide resin molding material is able to give a laminate of a polyamide molded article having excellent thermal weldability to thermoplastic polyurethane molded articles and having high adhesive strength and a thermoplastic polyurethane molded article by using, as the polyamide resin, a polyamide resin having a (terminal amino group/terminal carboxyl group) molar ratio of more than 1, especially polyamide 11 and/or polyamide 12 and adding an aromatic compound having a specified structure.

Next, the laminate of the present invention is described.

[Laminate]

The laminate of the present invention comprises a polyamide molded article obtained using the polyamide resin molding material described above and a thermoplastic polyurethane molded article thermally welded to each other. This laminate has excellent thermal weldability and has good adhesive strength.

(Thermoplastic polyurethane molded article)

A thermoplastic polyurethane (TPU) constituting the thermoplastic polyurethane molded article in the laminate of the present invention can be manufactured by allowing a diol and a diisocyanate, or a diol, a diisocyanate and a chain extender to react with each other. This TPU can be roughly classified into an ester based TPU using an ester based diol and an ether based TPU using an ether based diol.

In the laminate of the present invention, an ether based TPU is used because in particular, the adhesive strength between a polyamide resin layer and a thermoplastic polyurethane resin layer is high.

<Diol for ether based TPU>

Examples of a polyether diol which is used as a raw material of the ether based TPU include polyoxyethylene glycol, polyoxypropylene glycol, polyoxytetramethylene glycol obtained by ring-opening polymerization of tetrahydrofuran, other known various ether diols for polyurethane and the like.

<Diisocyanate for TPU>

Examples of a diisocyanate which is used as a raw material of the ether based TPU include aliphatic or alicyclic diisocyanates such as tetramethylene diisocyanate, pentamethylene diisocyanate, hexamethylene diisocyanate, lysine diisocyanate, cyclohexylmethane diisocyanate, 2,2,4- or 2,4,4-trimethylhexamethylene diisocyanate, isopropylidene bis(4-cyclohexyl isocyanate), methylcyclohexane diisocyanate, isophorone diisocyanate and the like; aromatic diisocyanates such as 2,4- or 2,6-tolylene diisocyanate, diphenylmethane-4,4'-diisocyanate, 3-methyldiphenylmethane-4,4'-diisocyanate, m- or p-phenylene diisocyanate, chlorophenylene-2,4-diisocyanate, naphthalene-1,5-diisocyanate, xylylene diisocyanate, tetramethylxylylene diisocyanate and the like; and the like. Of these, 4,4'-diphenylmethane diisocyanate is preferable.

<Chain extender for TPU>

A chain extender which is used for the manufacture of TPU is not particularly limited, and known chain extenders which are usually used for the manufacture of TPU can be used. It is preferable to use a low-molecular weight compound having two or more active hydrogen atoms capable of reacting with an isocyanate group in a molecule thereof and having a molecular weight of not more than 300.

Examples of the chain extruder include diols such as ethylene glycol, propylene glycol, 1,4-butanediol, 1,6-hexanediol, 1,4-bis(β-hydroxyethoxy)benzene, 1,4-cyclohexanediol, bis-(β-hydroxyethyl) terephthalate, xylylene glycol and the like; diamines such as hydrazine, ethylenediamine, propylenediamine, xylylenediamine, isophoronediamine, piperazine and derivatives thereof, phenylenediamine, tolylenediamine, xylenediamine, adipic acid dihydrazide, isophthalic acid dihydrazide and the like; amino alcohols such as aminoethyl alcohol, aminopropyl alcohol and the like; and the like. Of these, aliphatic diols having from 2 to 10 carbon atoms are preferable, and 1,4-butanediol is more preferable.

(Properties of laminate)

In the laminate of the present invention comprising a polyamide molded article and a TPU molded article thermally welded to each other, by containing, as a molding material of the polyamide molded article, a polyamide resin having a (terminal amino group/terminal carboxyl group) molar ratio of more than 1, especially polyamide 11 and/or polyamide 12 and adding an aromatic compound having a specified structure, the thermal weldability to all of ether based TPU molded articles can be improved.

In the laminate of the present invention, other thermoplastic resin layer may be further laminated on the polyamide molded article side and/or the TPU molded article side depending upon an application thereof. For example, in the case of using the laminate of the present invention for a hose for automobile piping, it is preferable that an internal layer is provided with a thermoplastic resin layer which is excellent in chemical resistance against corrosive substances present in a fuel, such as ethanol, methanol and the like, and barrier resistance against them, for example, a fluorine based resin layer and the like.

A method for manufacturing the laminate of the present invention by means of thermal welding is not particularly limited, and injection welding inclusive of a hot pressing method, an extrusion lamination method, a co-extrusion method, insert molding and the like, or the like can be adopted. Of these, a co-extrusion method is preferably adopted. Specifically, melts of molding materials for forming respective layers, which are kneaded and melted within two or more screw-provided extruders and come out from discharge ports, pass through a die provided in a tip of each of the extruders while coming into contact with each other in a molten state and are extruded and molded into a laminate.

(Applications of laminate)

The laminate of the present invention is utilized as various molded articles of arbitrary applications and shapes, such as automobile parts, engineering materials, industrial materials, electrical or electronic parts, mechanical parts, parts for office equipment, household articles, sport articles (especially, shoe soles), shoe parts, containers, sheets, films, fibers and others. More specifically, there are exemplified industrial tubes or hoses, pneumatic tubes or hoses, hydraulic tubes or hoses, paint spray hoses or tubes, tubes or hoses for automobile piping and the like. Above all, the laminate of the present invention is useful as an industrial hose or tube.

[Examples]

Next, the present invention is described in more detail by reference to the following Examples, but it should be construed that the present invention is not limited thereto at all.

In this respect, characteristics of polyamide based resins obtained in the respective Examples and adhesive strength of laminates for test were measured according to the following methods.

<Measuring method of terminal carboxyl group concentration>

A three-necked eggplant type flask was charged with a prescribed amount of a polyamide resin, and after adding 40 mL of benzyl alcohol, the flask was dipped in an oil bath set up at 180 °C under a nitrogen gas stream. The polyamide resin was stirred for dissolution by a stirring motor installed in an upper part of the flask and titrated with (1/20) N potassium hydroxide (as an ethanol solution thereof) using phenolphthalein as an indicator. A normal concentration of the terminal carboxyl group was determined according to the following expression.

$$[COOH] = (\text{Equivalents of COOH})/10^5\ g$$

<Measuring method of terminal amino group concentration>

A stopcock-equipped Erlenmeyer flask was charged with a prescribed amount of a polyamide resin, and after adding 40 mL of phenol/methanol (volume ratio: 9/1) as a solvent, the flask was stirred for dissolution by a magnet stirrer, followed by titration with (1/20) N hydrochloric acid using Thymol Blue as an indicator. A normal concentration of the terminal amino group was determined according to the following expression.

$$[NH_2] = (\text{Equivalents of } NH_2)/10^5\ g$$

<Measuring method of relative viscosity (ηr)>

In conformity with JIS K6920, a polyamide resin was completely dissolved in a concentration of 10 g/$dm^3$ in 98 % by mass sulfuric acid as a solvent and then measured at 25 °C using an Ubbelohde's viscometer.

<Measuring method of adhesive strength>

The adhesive strength was measured at a tensile rate of 50 mm/min in terms of peel strength using a T-peel tester (TENSILON 2500, manufactured by Orientec Co., Ltd.).

<u>Example 1 (</u>not part of the invention)

A 70-L autoclave was charged with 20 kg of ω-laurolactam, 0.5 kg of water and 49.4 g of isophoronediamine, and the inside of the polymerization vessel was purged with nitrogen. Subsequently, the temperature within the polymerization vessel was raised to 260 °C, and polymerization was performed with stirring for 2 hours while regulating a pressure within the vessel to 3.5 MPa. Thereafter, pressure relief to atmospheric pressure was performed over about 2 hours, and subsequently, the pressure was reduced to 0.05 MPa, thereby performing polymerization under a reduced pressure for 4 hours. Subsequently, nitrogen was introduced into the autoclave, and after returning the pressure to atmospheric pressure, the resulting polymer was taken out as a strand from a lower nozzle of the reaction vessel. The strand was cut to obtain pellets, which were then dried under a reduced pressure to obtain a terminal amino group-rich polyamide 12.

The obtained terminal amino group-rich polyamide 12 had a relative viscosity of 2.83, a terminal amino group concentration of 35 equivalents/$10^5$ g, a terminal carboxyl group concentration of 21 equivalents/$10^5$ g and a (terminal amino group concentration)/(terminal carboxyl group concentration) ratio of 1.67.

100 parts by mass of the foregoing pellets of the terminal amino group-rich polyamide 12 and 17.6 parts by mass of N-butylbenzenesulfonic acid amide (hereinafter referred to as "BBSA") were melt kneaded to prepare a polyamide resin molding material.

On the other hand, a trade name: ELASTOLLAN ET890, manufactured by BASF Japan Ltd. was used as the ether based TPU.

Using the foregoing two kinds of the materials, a laminate for test having a width of 25 mm, a length of 120 mm and a thickness of 3.5 mm and having a polyamide molded article and an ether based TPU molded article thermally welded to each other was prepared according to the following method and then measured for adhesive strength. The obtained results are shown in Table 1.

<Preparation of laminate>

(1) Preparation of polyamide sheet:

About 25 g of the above-prepared pellets of the polyamide resin were set in a spacer (120 mm x 120 mm, thickness: 1.5 mm). Subsequently, the foregoing spacer, a metal plate and a TEFLON (a registered trademark, hereafter the same) sheet were set so as have a layer configuration of metal plate/TEFLON sheet/spacer/TEFLON sheet/metal plate, preheated at 190 °C for 2 minutes using a press molding machine without applying a pressure and then pressed under a pressure of 10 kg/$cm^2$ at 190 °C for 2 minutes. Thereafter, the resultant was taken out and cooled for 2 minutes to achieve molding.

(2) Preparation of TPU (thermoplastic polyurethane) sheet:

About 45 g of pellets of TPU were set in a spacer (120 mm x 120 mm, thickness: 2 mm). Subsequently, the foregoing spacer, a metal plate and a TEFLON sheet were set so as have a layer configuration of metal plate/TEFLON sheet/spacer/TEFLON sheet/metal plate, preheated at 190 °C for 2 minutes using a press molding machine without applying a pressure and then pressed under a pressure of 10 $kg/cm^2$ at 190 °C for 2 minutes. Thereafter, the resultant was taken out and cooled for 2 minutes to achieve molding.

(3) Preparation of laminate sheet:

The polyamide sheet and the TPU sheet prepared above in (1) and (2) were superimposed into two layers and set in a spacer of 120 mm x 120 mm and having a thickness of 3.5 mm. Subsequently, the foregoing spacer, a metal plate and a TEFLON sheet were set so as have a layer configuration of metal plate/TEFLON sheet/spacer/TEFLON sheet/metal plate, preheated at 210 °C for 1 minute using a press molding machine without applying a pressure and then pressed under a pressure of 10 $kg/cm^2$ at 210 °C for 1 minute. Thereafter, the resultant was taken out and cooled for 2 minutes to achieve molding.

The obtained laminate sheet was cut out in a width of 25 mm and used as a test sample for T-peel test.

<u>Comparative Example 1</u>

A laminate for test was prepared in the same manner as in Example 1, except that BBSA was not added, and then measured for adhesive strength. The obtained results are shown in Table 1.

<u>Comparative Example 2</u>

A laminate for test was prepared in the same manner as in Example 1, except that a terminal carboxyl group-rich polyamide 12 prepared in the following method was used as the polyamide resin molding material in place of the terminal amino group-rich polyamide 12, and then measured for adhesive strength. The obtained results are shown in Table 1.

(Preparation of terminal carboxyl group-rich polyamide 12)

A 70-L autoclave was charged with 20 kg of ω-laurolactam, 0.5 kg of water and 28.8 g of stearic acid, and the inside of the polymerization vessel was purged with nitrogen. Subsequently, the temperature within the polymerization vessel was raised to 260 °C, and polymerization was performed with stirring for 2 hours while regulating a pressure within the vessel to 3.5 MPa. Thereafter, pressure relief to atmospheric pressure was performed over about 2 hours, and subsequently, the pressure was reduced to 0.08 MPa, thereby performing polymerization under a reduced pressure for 4 hours. Subsequently, nitrogen was introduced into the autoclave, and after returning the pressure to atmospheric pressure, the resulting polymer was taken out as a strand from a lower nozzle of the reaction vessel. The strand was cut to obtain pellets, which were then dried under a reduced pressure to obtain a terminal carboxyl group-rich polyamide 12.

The obtained terminal carboxyl group-rich polyamide 12 had a relative viscosity of 2.84, a terminal amino group concentration of 23 equivalents/$10^5$ g, a terminal carboxyl group concentration of 36 equivalents/$10^5$ g and a (terminal amino group concentration)/(terminal carboxyl group concentration) ratio of 0.64.

<u>Comparative Example 3</u>

A laminate for test was prepared in the same manner as in Example 1, except that in the preparation of the polyamide resin molding material in Example 1, the terminal carboxyl group-rich polyamide 12 was used in place of the terminal amino group-rich polyamide 12, and then measured for adhesive strength. The obtained results are shown in Table 1.

<u>Example 2</u>

A laminate for test was prepared in the same manner as in Example 1, except that in the preparation of the polyamide resin molding material in Example 1, 2-hexyldecyl p-hydroxybenzoate (hereinafter referred to as "HDPB") was used in place of the BBSA, and then measured for adhesive strength. The obtained results are shown in Table 1.

Comparative Example 4

A laminate for test was prepared in the same manner as in Example 1, except that a mixture obtained by kneading 100 parts by mass of the terminal carboxyl group-rich polyamide 12 and 17.6 parts by mass of HDPB was used as the polyamide resin molding material, and then measured for adhesive strength. The obtained results are shown in Table 1.

Table 1

| | Blending composition (parts by mass) | | | | Evaluation |
|---|---|---|---|---|---|
| | Polyamide resin | | Plasticizer | | |
| | Terminal amino group-rich polyamide 12 | Terminal carboxyl group-rich polyamide 12 | BBSA1) | HDPB2) | Adhesive strength3) (N/cm) |
| Example 1 * | 100 | - | 17.6 | - | 175 |
| Comparative Example 1 | 100 | - | - | - | 149 |
| Comparative Example 2 | - | 100 | - | - | 151 |
| Comparative Example 3 | - | 100 | 17.6 | - | 125 |
| Example 2 | 100 | - | - | 17.6 | 145 |
| Comparative Example 4 | - | 100 | - | 17.6 | 102 |

1) BBSA: N-Butylbenzenesulfonic acid amide
2) HDPB: 2-Hexyldecyl p-hydroxybenzoate
3) Adhesive strength: Average values regarding three samples Counterpart material: Ether based TPU ["ELASTOLLAN ET890", manufactured by BASF Japan Ltd.]
*: not part of the invention

It is understood from Table 1 that the adhesive strength of the laminate for test in Example 2 is markedly excellent as compared with that in Comparative Example 4.

Also, in view of the fact that the adhesive strength is not substantially different between Comparative Example 1 and Comparative Example 2, it is understood that it is not meant that the terminal amino group concentration of the polyamide resin influences the adhesive strength.

Example 3 (not part of the invention)

100 parts by mass of the terminal amino group-rich polyamide 12 and 17.6 parts by mass of BBSA were kneaded to prepare a polyamide resin molding material.

On the other hand, a trade name: ELASTOLLAN ET690, manufactured by BASF Japan Ltd. was used as the ester based TPU.

Using the foregoing two kinds of the materials, a laminate for test having a polyamide molded article and an ester based TPU molded article thermally welded to each other was prepared in the same manner as in Example 1 and then measured for adhesive strength. The obtained results are shown in Table 2.

Comparative Example 5

A laminate for test was prepared in the same manner as in Example 3, except that only the terminal carboxyl group-rich polyamide 12 was used as the polyamide resin molding material, and then measured for adhesive strength. The obtained results are shown in Table 2.

Comparative Example 6

A laminate for test was prepared in the same manner as in Example 3, except that in the preparation of the polyamide resin molding material in Example 3, the terminal carboxyl group-rich polyamide 12 was used in place of the terminal amino group-rich polyamide 12, and then measured for adhesive strength. The obtained results are shown in Table 2.

Example 4

A laminate for test was prepared in the same manner as in Example 3, except that in the preparation of the polyamide resin molding material in Example 3, HDPB was used in place of the BBSA, and then measured for adhesive strength. The obtained results are shown in Table 2.

Comparative Example 7

A laminate for test was prepared in the same manner as in Example 3, except that a mixture obtained by kneading 100 parts by mass of the terminal carboxyl group-rich polyamide 12 and 17.6 parts by mass of HDPB was used as the polyamide resin molding material, and then measured for adhesive strength. The obtained results are shown in Table 2.

Table 2

| | Blending composition (parts by mass) | | | | Evaluation |
|---|---|---|---|---|---|
| | Polyamide resin | | Plasticizer | | |
| | Terminal amino group-rich polyamide 12 | Terminal carboxyl group-rich polyamide 12 | BBSA[1)] | HDPB[2)] | Adhesive strength[3)] (N/cm) |
| Example 3* | 100 | - | 17.6 | - | 91.4 |
| Comparative Example 5 | - | 100 | - | - | 25.2 |
| Comparative Example 6 | - | 100 | 17.6 | - | 12.5 |
| Example 4 | 100 | - | - | 17.6 | 34.0 |
| Comparative Example 7 | - | 100 | - | 17.6 | 4.61 |

1) BBSA: N-Butylbenzenesulfonic acid amide
2) HDPB: 2-Hexyldecyl p-hydroxybenzoate
3) Adhesive strength: Average values regarding three samples Counterpart material: Ether based TPU ["ELASTOLLAN ET690", manufactured by BASF Japan Ltd.]
*: not part of the invention

It is understood from Table 2 that the adhesive strength of the laminate for test in Example 4 is markedly excellent as compared with that in Comparative Example 7.

In this respect, as is clear from Table 1 and Table 2, in the case where the counterpart material is an ether based TPU molded article, the adhesive strength is high as compared with that in the case of an ester based TPU molded article. However, in the case of an ester based TPU molded article, an enhancement rate of the adhesive strength of the Examples relative to the Comparative Examples is markedly high as compared with the case of an ether based TPU.

## Claims

1. A laminate comprising a polyamide resin molded article and a thermoplastic polyurethane molded article thermally welded to each other,
whereby the polyamide resin molded article is made from a thermal welding molding material comprising from 3 to

40 parts by mass of a compound (B) represented by the following general formula (2) based on 100 parts by mass of a polyamide resin (A) having a (terminal amino group/terminal carboxyl group) molar ratio of 1 or more:

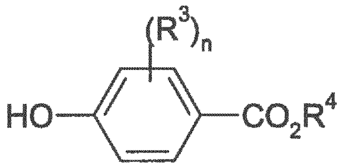

(2)

wherein

$R^3$ represents an alkyl group having from 1 to 4 carbon atoms; n represents an integer of from 0 to 5; and when n is 2 or more, each $R^3$ may be the same as or different from every other $R^3$; and
$R^4$ represents an alkyl group having from 4 to 20 carbon atoms and may contain at least one group selected from an ether group, an oxyethylene group and an oxypropylene group;
whereby the thermoplastic polyurethane molded article is an ether based polyurethane molded article.

**2.** The laminate according to claim 1, wherein the polyamide resin (A) is polyamide 11 and/or polyamide 12.

**3.** The laminate according to claim 1 or 2, wherein in the general formula (2), $R^4$ is an alkyl group having from 6 to 18 carbon atoms; and n is 0.

**4.** The laminate according to any of claims 1 to 3, which is thermally welded by a co-extrusion method.

**5.** Use of a thermal welding molding material comprising from 3 to 40 parts by mass of a compound (B) represented by the following general formula (2) based on 100 parts by mass of a polyamide resin (A) having a (terminal amino group/terminal carboxyl group) molar ratio of 1 or more:

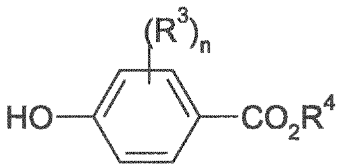

(2)

wherein

$R^3$ represents an alkyl group having from 1 to 4 carbon atoms; n represents an integer of from 0 to 5; and when n is 2 or more, each $R^3$ may be the same as or different from every other $R^3$; and
$R^4$ represents an alkyl group having from 4 to 20 carbon atoms and may contain at least one group selected from an ether group, an oxyethylene group and an oxypropylene group;
for preparing a laminate by thermal welding a molded article prepared from the thermal welding molding material to a molded article prepared from an ether based polyurethane.

**Patentansprüche**

**1.** Ein Laminat, umfassend ein Polyamidharz-Formteil und ein Formteil aus thermoplastischem Polyurethan, die thermisch miteinander verschweißt sind,
wobei das Polyamidharz-Formteil aus einem Material für thermisches Schweißformen hergestellt ist, umfassend 3 bis 40 Gewichtsteile einer Verbindung (B), die dargestellt wird durch die folgende allgemeine Formel (2), bezogen auf 100 Gewichtsteile eines Polyamidharzes (A) mit einem molaren Verhältnis (terminale Aminogruppe/terminale Carboxylgruppe) von 1 oder mehr:

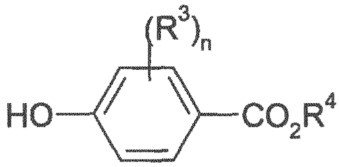

(2)

wobei

$R^3$ eine Alkylgruppe mit 1 bis 4 Kohlenstoffatomen darstellt; n eine ganze Zahl von 0 bis 5 darstellt; und wenn n 2 oder größer ist, jedes $R^3$ gleich oder verschieden von jedem anderen $R^3$ sein kann; und
$R^4$ eine Alkylgruppe mit 4 bis 20 Kohlenstoffatomen darstellt und mindestens eine Gruppe ausgewählt aus einer Estergruppe, einer Oxyethylengruppe und einer Oxypropylengruppe enthalten kann;
wobei das Formteil aus thermoplastischem Polyurethan ein Formteil aus Polyurethan auf Etherbasis ist.

**2.** Das Laminat nach Anspruch 1, wobei das Polyamidharz (A) Polyamid 11 und/oder Polyamid 12 ist.

**3.** Das Laminat nach Anspruch 1 oder 2, wobei in der allgemeinen Formel (2) $R^4$ eine Alkylgruppe mit 6 bis 18 Kohlenstoffatomen ist; und n 0 ist.

**4.** Das Laminat nach einem der Ansprüche 1 bis 3, welches durch ein Koextrusionsverfahren thermisch verschweißt wird.

**5.** Verwendung eines Materials für thermisches Schweißformen, umfassend 3 bis 40 Gewichtsteile einer Verbindung (B), dargestellt durch die folgende allgemeine Formel (2), bezogen auf 100 Gewichtsteile eines Polyamidharzes (A) mit einem molaren Verhältnis (terminale Aminogruppe/terminale Carboxylgruppe) von 1 oder mehr:

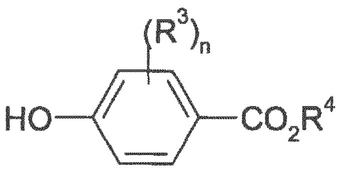

(2)

wobei

$R^3$ eine Alkylgruppe mit 1 bis 4 Kohlenstoffatomen darstellt; n eine ganze Zahl von 0 bis 5 darstellt; und wenn n 2 oder größer ist, jedes $R^3$ gleich oder verschieden von jedem anderen $R^3$ sein kann; und
$R^4$ eine Alkylgruppe mit 4 bis 20 Kohlenstoffatomen darstellt und mindestens eine Gruppe ausgewählt aus einer Estergruppe, einer Oxyethylengruppe und einer Oxypropylengruppe enthalten kann;
zur Herstellung eines Laminats durch thermisches Formschweißen eines Formteiles hergestellt aus dem Material für thermisches Formschweißen und eines Formteils hergestellt aus einem Polyurethan auf Etherbasis.

## Revendications

**1.** Stratifié comprenant un article moulé en résine polyamide et un article moulé en poiyuréthane thermoplastique qui sont soudés l'un à l'autre,
dans lequel l'article moulé en résine polyamide est fabriqué à partir d'un matériau de moulage et de soudage thermique comprenant 3 à 40 proportions en masse d'un composé (B) représenté par la formule générale suivante (2) basé sur 100 proportions en masse d'une résine polyamide (A) ayant un rapport molaire (de groupe amino terminal/groupe carboxyle terminal) de 1 ou plus :

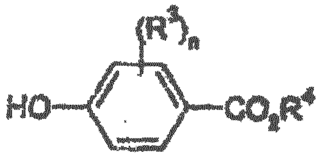

(2)

dans lequel

$R^3$ représente un groupe allyle ayant de 1 à 4 atomes de carbone; n représente un nombre entier de 0 à 5 ; et si n est 2 ou plus, chaque $R^3$ peut être égale à ou différent de chaque autre $R^3$ ; et
$R^4$ représente un groupe alkyle ayant de 4 à 20 atomes de carbone et peut contenir au moins un groupe sélectionné d'un groupement éther, d'un groupe oxyéthylène et d'un groupe oxypropylène ;
l'article moulé en polyuréthane thermoplastique étant un article moulé en polyuréthane à base d'éther.

**2.** Stratifié selon la revendication 1, dans lequel la résine polyamide (A) est du polyamide 11 et/ou du polyamide 12.

**3.** Stratifié selon la revendication 1 ou la revendication 2, dans lequel $R^4$ est un groupe alkyle ayant de 6 à 18 atomes de carbone et n est 0 dans la formule générale (2).

**4.** Stratifié selon l'une quelconque des revendications 1 à 3, lequel est soudé thermiquement par moyen d'un procédé de co-extrusion.

**5.** Utilisation d'un matériau de moulage et de soudage thermique comprenant 3 à 40 proportions en masse d'un composé (B) représenté par la formule générale suivante (2) basé sur 100 proportions en masse d'une résine polyamide (A) ayant un rapport molaire (de groupe amino terminal/groupe carboxyle terminal) de 1 ou plus :

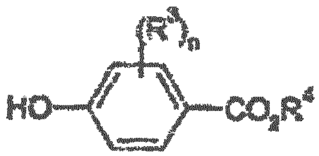

(2)

dans lequel

$R^3$ représente un groupe alkyle ayant de 1 à 4 atomes de carbone ; n représente un nombre entier de 0 à 5 ; et si n est 2 ou plus, chaque $A^3$ peut être égale à ou différent de chaque autre $R^3$ ; et
$R^4$ représente un groupe alkyle ayant de 4 à 20 atomes de carbone et peut contenir au moins un groupe sélectionné d'un groupement éther, d'un groupe oxyéthylène et d'un groupe oxypropylène ;
pour préparer un stratifié par soudage thermique d'un article moulé préparé à partir du matériau de moulage et de soudage thermique à un article moulé préparé à partir d'un polyuréthane à base d'éther.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 62283151 A
- JP 1185362 A
- WO 2004050363 A